# EUROPÄISCHE PATENTSCHRIFT

(11) **EP 1 639 928 B1**
(45) Veröffentlichungstag und Bekanntmachung des Hinweises auf die Patenterteilung: **30.04.2008**
(21) Anmeldenummer: 05111719.0
(22) Anmeldetag: 12.03.2003
(51) Int. Cl.: A47J 43/07

(54) **Messersatz für eine elektromotorisch betriebene Küchenmaschine sowie Küchenmaschine hierzu**
Set of knives for an electric motor-operated food processor, and corresponding food processor
Ensemble de lames pour un robot ménager a commande électromotrice et robot ménager correspondant

(30) Priorität: 19.03.2002 DE 10212029
(43) Veröffentlichungstag der Anmeldung: 29.03.2006
(62) Teilanmeldung aus: 03711977.3
(73) Patentinhaber: Vorwerk & Co. Interholding GmbH, 42275 Wuppertal (DE)
(72) Erfinder: Weber, Klaus Martin, D-42107, Wuppertal (DE); Hilgers, Stefan, Dr., D-45357, Essen (DE); Brede, Maike, D-58453, Witten (DE)
(74) Vertreter: Müller, Enno

(56) Entgegenhaltungen:
- DE-C- 973 957
- DE-C- 19 502 216
- FR-A- 2 608 034
- US-A- 4 173 310
- US-B1- 6 299 085

## Beschreibung

Die Erfindung betrifft zunächst einen Messerersatz für eine elektronisch betriebene Küchenmaschine nach den Merkmalen des Oberbegriffs des Anspruches 1.

Zum Stand der Technik ist auf die DE 195 02 216 A1, die US 4 173 310 A zu verweisen. Es besteht ein Bedürfnis, einen im Hinblick auf unterschiedlichen Einsatz vorteilhaften Messersatz anzugeben.

Diese Aufgabe ist beim Gegenstand des Anspruches 1 gelöst, wobei darauf abgestellt ist, dass die Schneide des zweiten Messers an der Sichelinnenseite des zweiten Messers ausgeformt ist und dass die Sichelaußenseite des zweiten Messers eine vertikal verlaufende Knetbrust aufweist. Hiermit kann, insbesondere wenn der Messersatz zum Antrieb in unterschiedlichen Richtungen eingesetzt wird, vorteilhaft ein Kneten aber auch ein Schneiden verwirklicht werden.

Darüber hinaus betrifft die Erfindung auch eine elektromotorisch betriebene Küchenmaschine mit einem solchen Messersatz. Diese Maschine ist im Anspruch 6 angegeben.

Die konkav gekrümmten, den Schneiden gegenüberliegenden Endbereiche der Endabschnitte sind zur Unterstützung der Kneteigenschaften mit einer vertikal sich erstreckenden Fläche ausgerüstet. In vorteilhafter Weiterbildung des Erfindungsgegenstandes ist vorgesehen, dass das Messer eine mittige Kröpfung aufweist, in welcher es an dem Messerlager befestigt ist. Diesbezüglich ist weiter vorgesehen, dass die beiden sichelförmigen Abschnitte gegenüber der Kröpfung nach unten stufenartig versetzt angeordnet sind. Diesbezüglich kann auch vorgesehen sein, dass lediglich ein sichelförmiger Abschnitt nach unten stufenartig versetzt angeordnet ist. Zufolge dieser erfindungsgemäßen Ausgestaltung ist zumindest ein sichelförmiger Abschnitt dem Topfboden zugewandt zugeordnet, was sich insbesondere bei einer Anordnung des erfindungsgemäßes Messersatzes in einem bodenbeheizbaren Gefäß von Vorteil erweist, da hierdurch ein Anbrennen des Mediums an dem Topfboden vermieden wird. Unterstützt wird dies noch dadurch, dass ein sichelförmiger Abschnitt horizontal verläuft; dies mit relativ geringem vertikalen Abstand zum Topfboden. Eine Weiterbildung des Erfindungsgegenstandes schlägt vor, dass oberhalb des ersten Messers ein zweites Messer angeordnet ist, dessen freikragende Endabschnitte sich winkelmäßig versetzt zu den sichelförmigen Abschnitten des ersten Messers erstrecken. Bevorzugt ist hier ein Winkelmäßige Versatz von ca. 60° bis 120° zu den sichelförmigen Endabschnitten des ersten Messers. Auch hier ist in vorteilhafter Weise vorgesehen, dass ein Endabschnitt des zweiten Messers sichelförmig verläuft, wobei jedoch die Schneide an der Sichelinnenseite ausgeformt ist. Demzufolge sind zwei konkave, in Drehrichtung des zweiten Messers betrachtete gleichgerichtete Schneiden ausgeformt, welche weiter, in Drehrichtung betrachtet, gleichgerichtet zu den Schneiden des ersten Messers verlaufen. So ist bei einer beispielhaften Drehung des Messersatzes in Uhrzeigerrichtung ein Zerkleinern des Mediums sowohl durch konkav als auch durch konvex ausgeformte Schneiden eines zweiten und eines ersten Messers des Messersatzes gegeben. Um auch bei einem Einsatz eines zweiten Messers durch Drehung des Messersatzes in entgegengesetzter Drehrichtung eine Knetfunktion zu erwirken, ist weiter vorgesehen, dass die Sichelaußenseite des zweiten Messers eine vertikal verlaufende Knetbrust aufweist. Ein verbessertes Schneidresultat wird dadurch erreicht, dass eine Krümmung der Sichel des zweiten Messers geringer ist als die Krümmung des ersten Messers. So beträgt beispielsweise der Krümmungsradius des sichelförmigen Endabschnittes des zweiten Messers etwa dem 2,5 bis 2-fachen des Endabschnittes des ersten Messers. Endsprechend der Ausgestaltung des ersten Messers weist auch das zweite Messer eine mittige Kröpfung auf, wobei jedoch hier die sichelförmigen Endabschnitte stufenmäßig versetzt nach oben angeordnet sind. Darüber hinaus besteht auch die Möglichkeit, dass das erste Messer und/oder das zweite Messer mit beidseitigen Schneiden ausgebildet ist. Erfindungsgemäß weist der Messersatz Messergeometrien auf, welche den Einsatz sowohl in der einen als auch in der anderen Drehrichtung erlauben, wobei je nach gewählter Drehrichtung eine andere Funktion gewählt wird. So wird beispielsweise in Uhrzeiger-Drehrichtung ein Schneider bzw. Zerkleinern des in den Topf eingefüllten Mediums erreicht. Bei Drehung in entgegengesetzter Richtung kann der Messersatz zum Kneten von Teigen genutzt werden. Sind die Rückseiten der Schneiden hingegen gleichfalls als Schneiden ausgebildet, so können dies eine spezielle Schneidengeometrie, z. B. zum Malen oder Pulverisieren bei hohen Drehzahlen aufweisen.

Hinsichtlich der elektromotorisch betriebenen Küchenmaschine mit einem entsprechenden Messersatz wird weiter vorgeschlagen, dass das Messer eine mittige Kröpfung aufweist, in welcher es an dem Messerlager befestigt ist. Als besonders vorteilhaft erweist sich diesbezüglich, dass die beiden sichelförmigen Abschnitte gegenüber der Kröpfung nach unten stufenartig versetzt angeordnet sind, wobei weiter ein oder auch beide sichelförmigen Abschnitte horizontal verlaufen. In einer Weiterbildung des Erfindungsgegenstandes ist vorgesehen, dass oberhalb des ersten, zuvor beschriebenen Messers ein zweites Messer angeordnet ist, dessen freikragenden Endabschnitte sich winkelmäßig versetzt zu den sichelförmigen Abschnitten des ersten Messers erstrecken. So ist ein Winkelversatz von erstem zu zweitem Messer von beispielsweise 60 bis 120° vorgesehen. Als besonders vorteilhaft erweist es sich hierbei, dass ein Endabschnitt des zweiten Messers sichelförmig verläuft, wobei die Schneider an der Sichelinnenseite ausgeformt und somit konkav gekrümmt ist. Auch hier wird bevorzugt, dass die, der Schneide gegenüberliegende Sichelaußenseite eine vertikal verlaufende Knetbrust ausweist. Als funktionstechnisch vorteilhaft erweist sich weiter, dass eine Krümmung der Sichel des zweiten Messer geringer ist als die Krümmung des ersten Messers. Auch wird vorgeschlagen, dass das zweite Messer eine mittige Kröpfung aufweist, wobei die sichelförmigen Endabschnitte stufenmäßig versetzt nach oben angeordnet sind. Schließlich kann auch vorgesehen sein, dass das erste Messer und/oder das zweite Messer mit beiseitigen Schneiden ausgebildet ist, wobei bevorzugt unterschiedliche Schneidengeometrien vorliegen, so dass beispielsweise die zu den in Uhrzeigerrichtung ausgerichteten Schneiden rückwärtig angeordneten weiteren Schneiden zur Zerkleinerung bei hohen Drehzahlen, so beispielsweise zum malen oder Pulverisieren dienen.

Nachstehend ist die Erfindung anhand der beigefügten Zeichnung, welche lediglich mehrere Ausführungsbeispiele darstellt, näher erläutert. Es zeigt:
- Fig. 1: eine erfindungsgemäße elektromotorisch betriebene Küchenmaschine mit einem Rührtopf und einem darin angeordneten Messersatz;
- Fig. 2: eine Einzeldarstellung eines Messersatzes in einer ersten Ausführungsform in Draufsicht;
- Fig. 3: die Seitenansicht hierzu;
- Fig. 4: die Draufsicht auf einen Messersatz in einer zweiten Ausführungsform;
- Fig. 5: die Seitenansicht hierzu;
- Fig. 6: den Schnitt gemäß der Linie VI-VI in Fig. 5;
- Fig. 7: eine dritte Ausführungsform eines Messersatzes in Draufsicht;
- Fig. 8: die Seitenansicht hierzu.

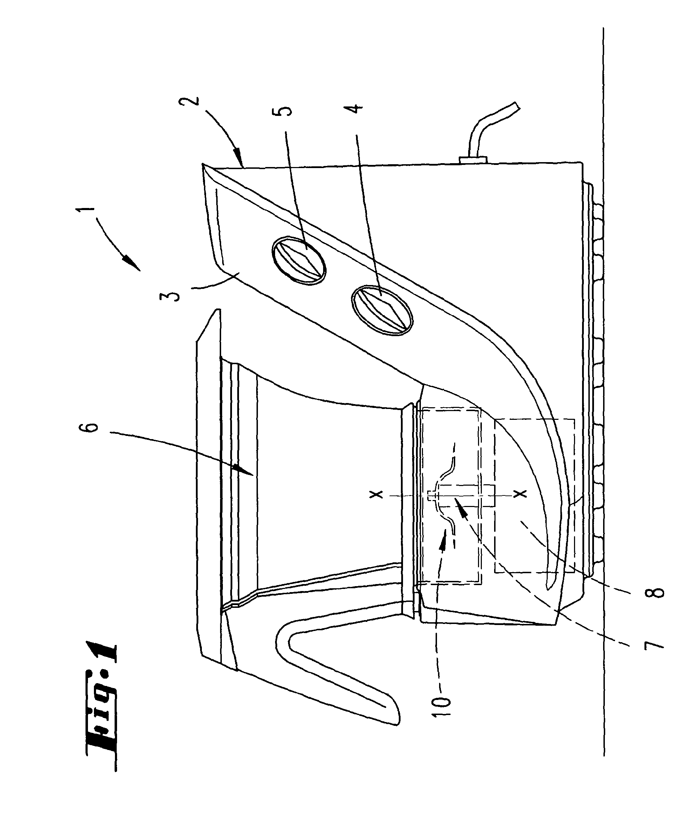

Dargestellt und beschrieben ist zunächst mit Bezug zu Fig. 1 eine Küchenmaschine 1 mit einem Gehäuse 2, welch letzteres ein Bedienfeld 3 aufweist. Dieses Bedienfeld 3 trägt gegebenenfalls einen Temperaturwähler 4 sowie einen Drehzahlsteller 5.

Des Weiteren weist das Gehäuse 2 einen Aufnahmebereich für ein abnehmbares und gegebenenfalls beheizbares Rührgefäß 6 auf. Letzteres ist mit einem Rührwerk 7 versehen, welches über eine nicht näher dargestellte Kupplung und einer rührwerkseitigen Antriebswelle 30 bei in dem Aufnahmebereich eingesetztem Rührgefäß 6 mit einem, über den Drehzahlsteller 5 regelbaren Elektromotor 8 in Verbindung steht.

Der Topfboden 9 des Rührtopfes 6 ist flach und im Wesentlichen eben ausgebildet, wobei weiter in diesem Topfboden ein Widerstand-Heizelement bspw. in Form einer Dickschichtheizung integriert sein kann.

Die senkrecht zum Topfboden 9 ausgerichtete Rührwerkachse x durchsetzt den Topfboden 9 mittig. Eine Festlegung des Rührwerkes 7 an den Topfboden 9 erfolgt mittels Verspannung.

Erfindungsgemäß ist das Rührwerk 7 als Messersatz 10 ausgebildet, mit einem ersten unteren Messer 11 und einem zweiten oberen Messer 12.

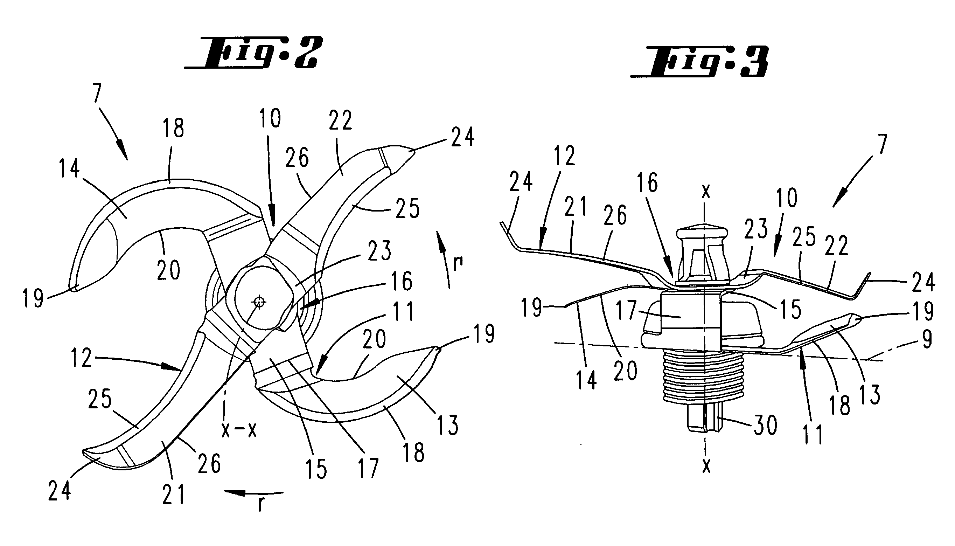

Die Fig. 2 und 3 zeigen eine erste Ausführungsform eines derartigen Messersatzes 10. Dessen erstes unteres Messer 11 weist zwei, bezogen auf die Rührwerkachse x, gegenüberliegende und, bezogen auf eine Projektion gemäß Fig. 2, gegensinnig verlaufende, sichelförmige Endabschnitte 13, 14 auf. Diese Endabschnitte 13 und 14 sind über eine mittige Kröpfung 15, in welcher das Messer 11 an dem Messerlager 16 befestigt ist, verbunden. Die Kröpfung 15 ist erreicht durch einen sich gleichmäßig beidseitig der Rührwerkachse x radial erstreckenden Horizontalabschnitt. An einem Ende dieses Horizontalabschnittes setzt direkt der eine sichelförmige Endabschnitt 14 an, dies unter Neigung dieses Endabschnittes 14 gegenüber dem horizontalen Abschnitt der Kröpfung 15 (vgl. Fig. 3). Die Neigung des Endabschnittes 14 zur Horizontalen beträgt hierbei bspw. 15 bis 30°.

Der gegenüberliegende Endabschnitt 13 des Messers 1 ist stufenartig versetzt unterhalb der Kröpfung 15 angeordnet, wozu ein an dem einen Ende des Horizontalabschnittes der Kröpfung 15 angebundener Vertikalabschnitt 17 vorgesehen ist, welch letzterer an seinem vertikal unteren Ende den sichelförmigen Endabschnitt 13 trägt.

Wie aus der Darstellung in Fig. 3 zu erkennen, erstreckt sich ein von dem Vertikalabschnitt 17 ausgehender erster Teilabschnitt des Endabschnittes 13 parallel zu dem Topfboden 9, diesen in einem Abstand, der geringer ist als die Messerdicke, überfahrend, während der sich anschließende zweite, frei auskragende Teilabschnitt des Endabschnittes 13 gegenüber dem Topfboden 9 geneigt nach oben verläuft, wobei auch hier eine Neigung zur Horizontalen von 15 bis 30° gewählt ist.

An den Sichelaußenseiten der Endabschnitte 13 und 14 sind entsprechend konvex ausgeformte Schneiden 18 ausgebildet. Diese weisen, wie in Fig. 2 zu erkennen, in eine Drehrichtung r im Uhrzeigersinn zur Ausübung einer Schneidfunktion. Gleichzeitig erhält das in dem Rührtopf 6 befindliche Medium durch die schräge Anordnung bzw. abschnittsweise schräge Anordnung der Endabschnitte 13 und 14 eine Vorzugsrichtung hinsichtlich der axialen Strömung.

Der erfindungsgemäße Messersatz 10 ist geeignet zum Einsatz in entgegengesetzter, d. h. entgegen dem Uhrzeigersinn gerichteter Drehrichtung r', wobei in dieser Drehrichtung r' durch die sichelförmige Ausprägung der Endabschnitte 13 und 14 die außenliegenden Messerspitzen 19 vorauseilen. Hierdurch kann das untere Messer 11 in Drehrichtung r' als Knethaken zur Herstellung von Teigen genutzt werden. Dies wird noch dadurch unterstützt, dass die, den Schneiden 18 gegenüberliegende Sichelinnenseite der Endabschnitte 13 und 14 eine vertikal verlaufende Knetbrust 20 aufweisen; demnach nicht schneidenförmig ausgebildet sind.

Des Weiteren kann die stumpfe Sichelinnenseite bei Drehung des Messersatzes 10 in Drehrichtung r' auch dazu genutzt werden, in einem Heizbetrieb des Rührtopfes 6 den Messersatz 10 als reines Rührwerk zur Durchmischung, ohne Medienbestandteile zu zerschneiden, zu nutzen. Ferner wird das Medium von außen nach innen gefördert und die axiale Strömungsrichtung umgekehrt.

Oberhalb des ersten Messers 11 ist das zweite Messer 12 angeordnet, dessen freikragende Endabschnitte 21, 22 sich winkelmäßig versetzt zu den sichelförmigen Endabschnitten 13,14 des ersten Messers 11 erstrecken, wobei weiter diese Endabschnitte 21, 22, in einer Projektion gemäß Fig. 2 betrachtet, gegenüberliegend und gegensinnig verlaufend ausgerichtet sind. Die Anordnung der Messer 11 und 12 zueinander ist hierbei so gewählt, dass eine mittige, mit einem Horizontalabschnitt versehene Kröpfung 23 des zweiten Messers 12 etwa um 60° in Drehrichtung r versetzt zu der Kröpfung 15 des ersten Messers 11 ausgerichtet ist.

Von dieser Kröpfung 23 ausgehend sind die Endabschnitte 21, 22 stufenmäßig versetzt nach oben angeordnet, wobei, wie in Fig. 3 zu erkennen, ein Endabschnitt 22 in Richtung auf sein freies Ende auch wieder abfallend geneigt verlaufen kann. In dem dargestellten Ausführungsbeispiel sind die freien Enden - die Messerspitzen 24 - einen Winkel von ca. 120° zur Endabschnittserstreckung einschließend nach oben abgewinkelt.

Die Endabschnitte 21 und 22 verlaufen - entlang der, in Drehrichtung r weisenden Randkante - sichelförmig, wobei Schneiden 25 an der Sichelinnenseite ausgeformt sind und demnach konkav verlaufen. Die Schneiden 25 weisen entsprechend den Schneiden 18 des ersten Messers 11 in Drehrichtung r, womit bei Drehung des Messersatzes 10 im Uhrzeigersinn (Drehrichtung r) vier in verschiedenen Höhen angeordnete und großteils geneigt verlaufende Schneiden 18 und 25 auf das in dem Rührtopf 6 befindliche Medium einwirken, wobei hier weiter das wechselweise Einwirken von konvexen und konkaven Schneiden von Vorteil ist.

Wie weiter insbesondere aus der Fig. 2 zu erkennen, ist die Krümmung der Sichel der Endabschnitte 21, 22 geringer als die Krümmung der Endabschnitte 13 und 14 des ersten Messers. So ist an dem zweiten Messer 12 ein Krümmungsradius im Bereich der Schneiden 25 gewählt, welcher etwa dem 1,5 bis 2-fachen des Krümmungsradius' im Bereich der Schneiden 18 des ersten Messers 11 entspricht.

Auch die Sichelaußenseiten des zweiten Messers 12 weisen vertikal verlaufende Knetbrüste 26 auf, womit die Funktion des unteren Messers 11 bei Drehung des Messersatzes 10 in Drehrichtung r' bspw. zur Herstellung von Teigen durch die gewählte Ausgestaltung des oberen Messers 12 unterstützt wird.

Alternativ zu dem dargestellten und beschriebenen Ausführungsbeispiel können die Messer 11 und/oder 12 auch beidseitig, d. h. mit in beiden Drehrichtung r und r' wirkenden Schneiden versehen sein, wobei diesbezüglich unterschiedliche Schneidengeometrien bevorzugt werden.

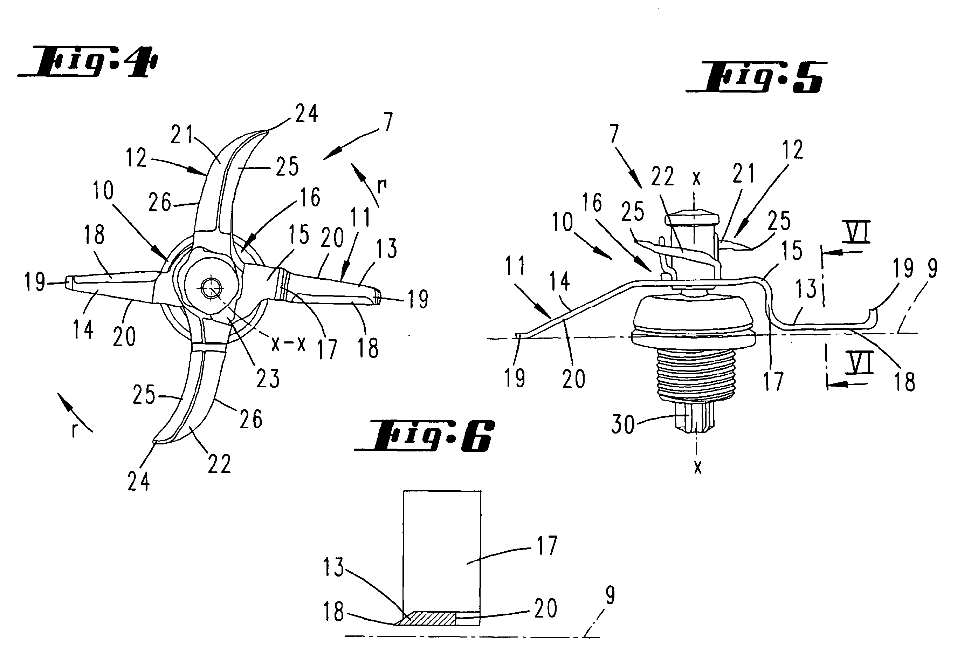

Das in den Fig. 4 bis 6 dargestellte zweite Ausführungsbeispiel unterscheidet sich zunächst zu dem zuvor beschriebenen Ausführungsbeispiel dadurch, dass die Endabschnitte 13 und 14 des unteren Messers 11 gegenüberliegend radial gestreckt verlaufen. Auch diese weisen in Drehrichtung r gerichtete Schneiden 18 auf. Die rückwärtigen, in Gegendrehrichtung r' weisenden Flanken sind auch hier als Knetbrüste 20 ausgeformt.

Ein Endabschnitt 13 verläuft über seine Gesamterstreckung parallel und mit Abstand zu dem ebenen Topfboden 9, wobei der Abstand geringer als die Messerdicke gewählt ist. So ist bei einer Messerdicke von bspw. 2 mm ein Abstand zum Topfboden 9 von ca. einem Millimeter vorgesehen.

Die an dem freien Ende des dem Topfboden 9 zugeordneten Endabschnittes 13 angeformte Messerspitze 19 erstreckt sich nach oben unter Einschluss eines Winkels von etwa 90° zum Endabschnitt 13.

Der gegenüberliegende Endabschnitt 14 verläuft ausgehend vom Horizontalabschnitt der Kröpfung 15 in einem Winkel von etwa 15 bis 30° zur Horizontalen geneigt in Richtung auf den Topfboden 9, wobei dessen freies, zu einer Messerspitze 19 ausgebildete Ende mit geringem Abstand zum Topfboden 9 etwa horizontal ausgerichtet ist (vgl. Fig. 5).

Das Obermesser 12 entspricht etwa dem des zuvor beschriebenen Ausführungsbeispieles. Auch dessen Endabschnitte 21 und 22 sind sichelförmig ausgebildet, wobei auf der Sichelinnenseite die Schneiden 25 und auf der Sichelaußenseite Knetbrüste 26 ausgeformt sind. Beide Endabschnitte 21, 22 sind zur mittigen Kröpfung 23 stufenmäßig versetzt nach oben angeordnet.

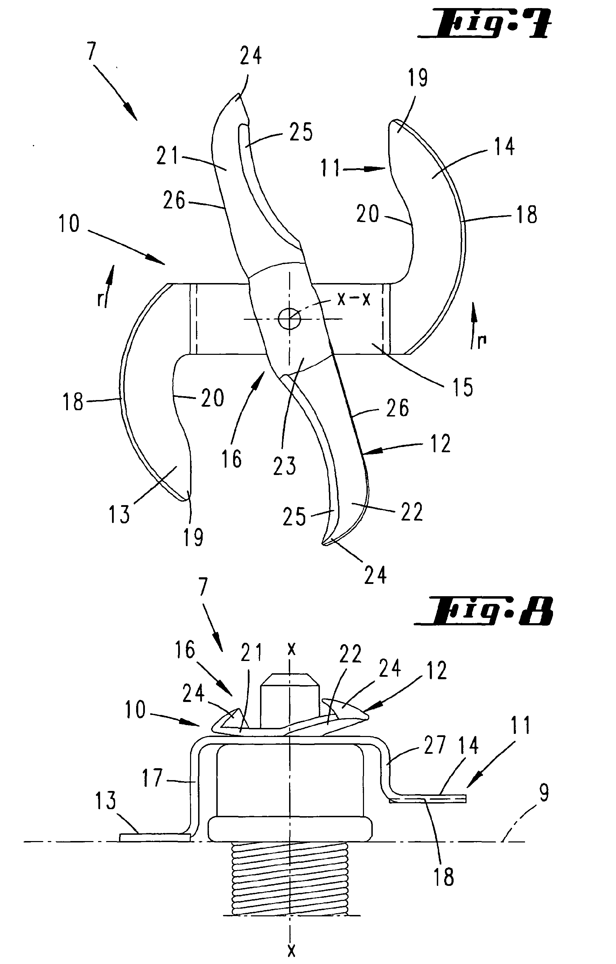

Eine weitere Ausführungsform zeigen die Fig. 7 und 8. Auch hierbei erstreckt sich ein Endabschnitt 13 des Untermessers 11 parallel und mit geringem Abstand zum Topfboden 9. Der gegenüberliegende Endabschnitt 14 verläuft in diesem Ausführungsbeispiel gleichfalls parallel zum Topfboden 9, jedoch mit einem größeren Abstand hierzu, wobei ein Abstandsmaß gewählt ist, welches etwa dem halben Abstandsmaß zwischen dem Horizontalabschnitt der Kröpfung 15 und dem Topfboden 9 entspricht. Dieser Endabschnitt 14 ist gleich dem Eridabschnitt 13 über einen Vertikalabschnitt 27 an dem Honzontalabschnitt der Kröpfung 15 angebunden.

Durch die flache Führung des einen Endabschnittes 13 des ersten Messers 11 mit geringem Abstand oberhalb des Topfbodens 9 wird bei gleichzeitiger Verwendung des Topfbodens 9 als Heizscheibe ein Anbrennen von Speisen vermieden. Hierzu kann in besonderem Maße der Rechts-/Lmkslauf des Rührwerks 7 bzw. des Messersatzes 10 genutzt werden, da durch die starke Verwirbelung bis in die Grenzschicht das Entstehen einer wärmedurchgangsbehindernden Schicht vermieden wird.

## Patentansprüche

1. Messersatz (10) für eine elektromotorisch betriebene Küchenmaschine (1), mit einem zentral befestigten, an seinen gegenüberliegenden freien Endbereichen eine Messerschneide (18) ausbildenden ersten Messer (11) und einem oberhalb des ersten Messers (11) angeordneten zweiten Messer (12), wobei ein Endabschnitt (21, 22) des zweiten Messers (12) sichelförmig verläuft, **dadurch gekennzeichnet, dass** die Schneide (25) des zweiten Messers (12) an der Sichelirmenseite des zweiten Messers (12) ausgeformt ist und dass die Sichelaußenseite des zweiten Messers (12) eine vertikal verlaufende Knetbrust (26) aufweist.

2. Messersatz nach Anspruch 1, **dadurch gekennzeichnet, dass** das Messer (11) eine mittige Kröpfung (15) aufweist, in welcher es an dem Messerlager (16) befestigt ist.

3. Messersatz nach einem der vorhergehenden Ansprüche, **dadurch gekennzeichnet, dass** das erste Messer (11) Abschnitte (13,14) aufweist, die gegenüber der Kröpfung (15) nach unten stufenartig versetzt angeordnet sind.

4. Messersatz nach einem der Ansprüche 1 bis 3, **dadurch gekennzeichnet, dass** das zweite Messer (12) eine mittige Kröpfung (23) aufweist, wobei die sichelförmigen Endabschnitte (21, 22) stufenmäßig versetzt nach oben angeordnet sind.

5. Messersatz nach einem der vorhergehenden Ansprüche, **dadurch gekennzeichnet, dass** das erste Messer mit beidseitigen Schneiden ausgebildet ist.

6. Elektromotorisch betriebene Küchenmaschine (1) mit einem Rührtopf (6) und einem darin angeordneten, über eine Antriebswelle (30) angetriebenen Messersatz (10) nach einem der Ansprücht 1 bis 4.

7. Küchenmaschine nach Anspruch 6, **dadurch gekennzeichnet, dass** der Topfboden (9) flach ausgebildet ist und dass ein sichelförmiger Endabschnitt (13) des ersten Messers in einem Abstand, der geringer ist als die Messerdicke, den Boden (9) überfährt.

8. Küchenmaschine nach Anspruch 7 , **dadurch gekennzeichnet, dass** der sichelförmige Endabschnitt (13, 14) des ersten Messers parallel zum Boden (9) ausgerichtet ist.

9. Küchenmaschine nach einem der Ansprüche 7 oder 8, **dadurch gekennzeichnet, dass** die Sichelinnenseite des ersten Messers eine vertikal verlaufende Knetbrust (20) aufweist.

10. Küchenmaschine nach einem der vorhergehenden Ansprüche, **dadurch gekennzeichnet, dass** ein sichelförmiger Abschnitt (13, 14) horizontal verläuft.

11. Küchenmaschine nach einem der vorhergehenden Ansprüche, **dadurch gekennzeichnet, dass** oberhalb des ersten Messers (11) ein zweites Messer angeordnet ist, dessen freikragende Endabschnitte (21, 22) sich winkelmäßig versetzt zu den sichelförmigen Abschnitten (13, 14) des ersten Messers (11) erstrecken.

12. Küchenmaschine nach einem der vorhergehenden Ansprüche, **dadurch gekennzeichnet, dass** ein Endabschnitt (21, 22) des zweiten Messers (12) sichelförmig verläuft, wobei die Schneide (25) an der Sichelinnenseite ausgeformt ist.

13. Küchenmaschine nach einem der vorhergehenden Ansprüche, **dadurch gekennzeichnet, dass** die Sichelaußenseite eine vertikal verlaufende Knetbrust (26) aufweist.

14. Küchenmaschine nach einem der vorhergehenden Ansprüche, **dadurch gekennzeichnet, dass** eine Krümmung der Sichel des zweiten Messers (12) geringer ist als die Krümmung des ersten Messers (11).

15. Küchenmaschine nach einem der vorhergehenden Ansprüche, **dadurch gekennzeichnet, dass** das erste Messer (11) und/oder das zweite Messer (12) mit beidseitigen Schneiden ausgebildet ist.

## Claims

1. A set (10) of cutters for a food processor (1) driven by an electric motor, having a centrally secured first cutter blade (11) forming a blade edge (18) at its opposite free end regions, and a second cutter blade (12) disposed above the first cutter blade (11), an end portion (21, 22) of the second cutter blade (12) extending in the shape of a sickle, **characterized in that** the cutting edge (25) of the second cutter blade (12) is formed on the inner side of the sickle of the second cutter blade (12) and **in that** the outer side of the sickle of the second cutter blade (12) has a vertically extending kneading breast (26).

2. A set of cutters according to Claim 1, **characterized in that** the first cutter blade (11) has a central right angle bend (15), in which it is secured to the cutter blade mount (16).

3. A set of cutters according to either of the preceding claims, **characterized in that** the first cutter blade (11) has portions (13, 14), which are disposed offset in a downwardly stepwise manner with respect to the right angle bend (15).

4. A set of cutters according to any of Claims 1 to 3, **characterized in that** the second cutter blade (12) has a central right angle bend (23), the sickle-shaped end portions (21, 22) being disposed offset upwardly in a stepwise manner.

5. A set of cutters according to any of the preceding claims, **characterized in that** the first cutter blade is formed with cutting edges on both sides.

6. A food processor (1) driven by an electric motor and having a mixing vessel (6) and a set (10) of cutters according to any of Claims 1 to 4, the set of cutters being disposed in the vessel and driven by a drive shaft (30).

7. A food processor according to Claim 6, **characterized in that** the base (9) of the vessel is formed flat and **in that** a sickle-shaped end portion (13) of the first cutter blade passes over the base (9) at a spacing which is less than the thickness of the cutter blade.

8. A food processor according to Claim 7, **characterized in that** the sickle-shaped end portion (13, 14) of the first cutter blade is aligned parallel to the base (9).

9. A food processor according to either of Claims 7 and 8, **characterized in that** the inner side of the sickle of the first cutter blade has a vertically extending kneading breast (20).

10. A food processor according to any of the preceding claims, **characterized in that** a sickle-shaped portion (13, 14) extends horizontally.

11. A food processor according to any of the preceding claims, **characterized in that** a second cutter blade is disposed above the first cutter blade (11), freely projecting end portions (21, 22) of the second cutter blade extending offset at an angle with respect to the sickle-shaped portions (13, 14) of the first cutter blade (11).

12. A food processor according to any of the preceding claims, **characterized in that** the end portion (21, 22) of the second cutter blade (12) extends in the shape of a sickle, the cutting edge (25) being formed on the inner side of the sickle.

13. A food processor according to any of the preceding claims, **characterized in that** outer side of the sickle has a vertically extending kneading breast (26).

14. A food processor according to any of the preceding claims, **characterized in that** curvature of the sickle of the second cutter blade (12) is less than the curvature of the first cutter blade (11).

15. A food processor according to any of the preceding claims, **characterized in that** the first cutter blade (11) and/or the second cutter blade (12) are formed with cutting edges on both sides.

## Revendications

1. Ensemble de lames (10) pour un robot ménager (1) à commande d'électromoteur avec une première lame (11) fixée de façon centrale et réalisant au niveau de ses zones d'extrémité libres opposées un tranchant de lame (18) et avec une deuxième lame (12) disposée au-dessus de la première lame (11), dans lequel une section d'extrémité (21, 22) de la deuxième lame (12) s'étend en forme de croissant, **caractérisé en ce que** le tranchant (25) de la deuxième lame (12) est conformé sur le côté de croissant intérieur de la deuxième lame (12) et **en ce que** le côté de croissant extérieur de la deuxième lame (12) présente une face de pétrissage (26) s'étendant verticalement.

2. Ensemble de lames selon la revendication 1, **caractérisé en ce que** la lame (11) présente un coude central (15) dans lequel elle est fixée au palier de lame (16).

3. Ensemble de lames selon l'une des revendications précédentes, **caractérisé en ce que** la première lame (11) présente des sections (13, 14) qui sont disposées en étant décalées de façon étagée vers le bas par rapport au coude (15).

4. Ensemble de lames selon l'une des revendications 1 à 3, **caractérisé en ce que** la deuxième lame (12) présente un coude central (23), dans lequel les sections d'extrémité en forme de croissant (21, 22) sont disposées en étant décalées de façon étagée vers le haut.

5. Ensemble de lames selon l'une des revendications précédentes, **caractérisé en ce que** la première lame est réalisée avec des tranchants des deux côtés.

6. Robot ménager à commande d'électromoteur (1), comprenant un récipient de mélange (6) et un ensemble de lames (10) disposé dans celui-ci et entraîné par un arbre d'entraînement (30) selon l'une des revendications 1 à 4.

7. Robot ménager selon la revendication 6, **caractérisé en ce que** le fond de récipient (9) est réalisé plat et **en ce qu'**une section d'extrémité en forme de croissant (13) de la première lame passe sur le fond (9) à une distance qui est inférieure à l'épaisseur de lame.

8. Robot ménager selon la revendication 7, **caractérisé en ce que** la section d'extrémité en forme de croissant (13, 14) de la première lame est orientée parallèlement au fond (9).

9. Robot ménager selon l'une des revendications 7 ou 8, **caractérisé en ce que** le côté de croissant intérieur de la première lame présente une face de pétrissage (20) s'étendant verticalement.

10. Robot ménager selon l'une des revendications précédentes, **caractérisé en ce qu'**une section en forme de croissant (13, 14) s'étend horizontalement.

11. Robot ménager selon l'une des revendications précédentes, **caractérisé en ce qu'**au-dessus de la première lame (11), une deuxième lame est disposée dont les sections d'extrémité (21, 22) s'étendent librement en étant décalées de façon angulaire par rapport aux sections en forme de croissant (13, 14) de la première lame (11).

12. Robot ménager selon l'une des revendications précédentes, **caractérisé en ce qu'**une section d'extrémité (21, 22) de la deuxième lame (12) s'étend en forme de croissant, le tranchant (25) étant conformé sur le côté de croissant intérieur.

13. Robot ménager selon l'une des revendications précédentes, **caractérisé en ce que** le côté de croissant extérieur présente une face de pétrissage (26) s'étendant verticalement.

14. Robot ménager selon l'une des revendications précédentes, **caractérisé en ce qu'**une courbure du croissant de la deuxième lame (12) est inférieure à la courbure de la première lame (11).

15. Robot ménager selon l'une des revendications précédentes, **caractérisé en ce que** la première lame (11) et/ou la deuxième lame (12) est/sont réalisée(s) avec des tranchants des deux côtés.
